# EUROPÄISCHE PATENTSCHRIFT

(11) **EP 3 619 023 B1**
(45) Veröffentlichungstag und Bekanntmachung des Hinweises auf die Patenterteilung: **22.06.2022**
(21) Anmeldenummer: 18721795.5
(22) Anmeldetag: 03.05.2018
(51) Int. Cl.: B29C 45/77, B29C 45/76

(54) **STEUERN UND REGELN DES DRUCKS EINER ZYKLISCH ARBEITENDEN SPRITZGIESSMASCHINE**
CONTROL AND REGULATION OF THE PRESSURE OF A CYCLICALLY OPERATING INJECTION MOULDING MACHINE
COMMANDE ET RÉGLAGE DE LA PRESSION D'UNE MACHINE DE MOULAGE PAR INJECTION À FONCTIONNEMENT CYCLIQUE

(30) Priorität: 05.05.2017 DE 102017207586
(43) Veröffentlichungstag der Anmeldung: 11.03.2020
(73) Patentinhaber: Arburg GmbH + Co KG, 72290 Loßburg (DE)
(72) Erfinder: RUF, Thomas, 78727 Oberndorf (DE); DUFFNER, DR., Eberhardt, 72181 Starzach (DE)
(74) Vertreter: RPK Patentanwälte Reinhardt, Pohlmann und Kaufmann Partnerschaft mbB
(86) Internationale Anmeldenummer: PCT/EP2018/061342
(87) Internationale Veröffentlichungsnummer: WO 2018/202773

(56) Entgegenhaltungen:
- EP-A1- 0 531 532
- EP-A1- 2 174 769
- EP-A2- 0 897 786
- DE-A1-102014 005 500
- US-A- 4 968 462

## Beschreibung

### Gebiet der Erfindung

Die Erfindung betrifft ein Verfahren zum Steuern und Regeln eines Spritzdrucks einer zyklisch arbeitenden Spritzgießmaschine nach dem Oberbegriff des Anspruches 1, einen verfahrensgemäßen Regler sowie eine den Regler aufweisende und/oder verfahrensgemäße Spritzgießmaschine.

### Stand der Technik

Gattungsgemäße Verfahren, Regler sowie Spritzgießmaschinen sind beispielsweise aus der EP 0 837 764 B1 und DE 10 2014 005500 A1 bekannt. Zunächst wird ein Spritzgießmaterial z.B. mittels einer Plastifiziereinheit plastifiziert, aufbereitet und homogenisiert bereitgestellt. Dieses Spritzgießmaterial wird unter Druck in zumindest eine Kavität eines Spritzgießwerkzeuges eingespritzt. Zur Steuerung und Regelung des Einspritzprozesses und/oder des Erhärtens des Materials in der zumindest einen Kavität kann ein Ist-Spritzdruck z.B. mittels einer Sensorvorrichtung erfasst werden. Während eines Zyklus der Spritzgießmaschine kann ein Umschalten in eine Nachdruckregelphase erfolgen, bei der auf das bereits in der Kavität befindliche und diese im Wesentlichen vollständig ausfüllende Spritzgießmaterial ein gewünschter Druck ausgeübt werden kann. Der gewünschte Druck kann in Form eines Sollspritzdrucks für die Nachdruckregelphase vorgegeben werden. Mittels Regelmitteln kann ein Ist-Spritzdruck entsprechend dieser Vorgabe eingestellt werden.

Es ist bekannt, den Sollspritzdruck während der Nachdruckregelphase als Konstante vorzugeben. Dies kann in Form eines Sollwertsprunges erfolgen, der an einem Umschaltzeitpunkt stattfindet, an dem die Spritzgießmaschine in die Nachdruckregelphase umgeschaltet wird. Aufgrund des Sollwertsprunges findet ein Übergangsvorgang statt, während dem mit Hilfe der Regelmittel der Ist-Spritz-druck auf den vorgegebenen konstanten Soll-Spritzdruck eingestellt wird.

Außerdem ist es bekannt, für den Übergangsvorgang den Soll-Spritzdruck rampenförmig vorzugeben. Auch vor dem Umschalten auf die Nachdruckregelphase sind unterschiedliche Regelungs- und/oder Steuerungsverfahren bekannt. So wird beispielsweise gemäß der EP 0 837 764 B1 während des Einspritzens des Spritzgießmaterials in die zumindest eine Kavität ein Weg einer Schnecke der Plastifiziereinheit als Sollgröße vorgegeben. Aus der US 6,565,781 B2 und der EP 1 018 421 A2 sind Verfahren bekannt, die sich auf den Spritzgießprozess vor dem Umschaltzeitpunkt beziehen und eine Geschwindigkeit der Schnecke als Vorgabegröße verwenden. Darüber hinaus sind Verfahren bekannt, die sich damit befassen, einen möglichst vorteilhaften Umschaltzeitpunkt an der Spritzgießmaschine während des Spritzgießzyklus einzustellen. Ein entsprechendes Verfahren ist aus der EP 0 854 778 B1 bekannt.

Bei der DE 10 2014 016 505 A1 ist in einem Spritzgusszyklus ein einzelner Prozess (Zwischenprozess) zwischen einem Einspritzprozess und einem Abpackprozess vorgesehen. Außerdem werden Bedingungen zum Umschalten aus dem Einspritzprozess in den Zwischenprozess und zum Umschalten aus dem Zwischenprozess in den Abpackprozess einzeln eingestellt. In dem Zwischenprozess wird ein Einspritzdruck erfasst und wird ein Solldruck auf der Grundlage des Einspritzdrucks erlangt. Eine Drucksteuerung wird in dem Zwischenprozess auf der Grundlage des eingestellten Solldrucks durchgeführt. Erst danach erfolgt ein Umschalten in den Abpackprozess.

### Darstellung der Erfindung

Der Erfindung liegt die Aufgabe zugrunde, bei einer zyklisch arbeitenden Spritzgießmaschine einen nach einem Umschaltzeitpunkt erfolgenden Übergangsvorgang in eine Nachdruckregelphase zu verbessern, insbesondere bei Mehrfachkavitäten einen bestmöglichen Ausgleich von Füllunterschieden zu ermöglichen.

Diese Aufgabe wird durch ein Verfahren zum Steuern und Regeln eines Drucks, insbesondere eines Werkzeuginnen- und/oder Spritzdrucks, einer zyklisch arbeitenden Spritzgießmaschine gemäß Anspruch 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Zunächst wird ein plastifiziertes Spritzgießmaterial bereitgestellt, das z.B. mittels einer Plastifiziereinheit der Spritzgießmaschine plastifiziert wird und durch eine Vorschubbewegung einer Schnecke der Plastifiziereinheit in wenigstens eine Kavität eingespritzt wird. Ein entsprechendes Werkzeug, das auf die Spritzgießmaschine montiert ist, kann also eine Vielzahl von Kavitäten aufweisen. Diese Kavitäten bzw. Mehrfachkavitäten können insbesondere hydrodynamisch parallel geschaltet sein, also parallel mit dem Spritzgießmaterial gefüllt werden. An einer Spritzgießeinheit der Spritzgießmaschine erfolgt ein Erfassen eines Ist-Drucks, insbesondere Ist-Spritzdrucks, mittels einer Sensorvorrichtung. Diese weist insbesondere zumindest eine Messstelle auf. Die Messstelle kann an einer geeigneten Stelle angeordnet sein, insbesondere stromabwärts einer Förderschnecke und stromaufwärts einer Kavität des Werkzeugs.

Während eines Zyklus der Spritzgießmaschine erfolgt zu einem Umschaltzeitpunkt ein Umschalten auf eine Nachdruckregelphase. Der Umschaltzeitpunkt kann von unterschiedlichen Parametern abhängen und zumindest näherungsweise mit einem Zeitpunkt zusammenfallen, an dem die zumindest eine Kavität vollständig oder zumindest beinahe vollständig mit dem Spritzgießmaterial gefüllt ist. Für die Nachdruckregelphase wird ein Soll-Druck, insbesondere ein Soll-Spritzdruck vorgegeben. Entsprechend dieser Vorgabe kann mittels einer geeigneten Regelvorrichtung der Druck, insbesondere ein Spritzdruck, beeinflusst bzw. auf diese eingestellt werden.

Zum Umschaltzeitpunkt weist der Ist-Druck, insbesondere der Ist-Spritzdruck, üblicherweise einen von einem während der Nachrduckregelphase gewünschten Druckniveau abweichenden Wert auf. Es ist möglich, den Soll-Druck, insbesondere den Soll-Spritzdruck, zum Umschaltzeitpunkt zunächst an den aktuellen Ist-Druck, insbesondere den Ist-Spritzdruck, anzupassen. Von diesem am Umschaltzeitpunkt herrschenden Istwert wird der Ist-Druck, insbesondere der Ist-Spritzdruck, während eines Übergangsvorgangs durch einen Steuerungs- und oder Regelvorgang auf einen anderen Druck, insbesondere konstanten Druck, eingestellt.

Für diesen Übergangsvorgang wird ein Soll-Druck, insbesondere ein Soll-Spritzdruck, als Solldruckverlauf, insbesondere als Soll-Spritzdruckverlauf, vorgegeben, der zumindest abschnittsweise gekrümmt und/oder nicht linear ist. Dadurch ist es möglich, den Übergangsvorgang in den Nachdruck zu verbessern, insbesondere können unerwünschte Druckspitzen zum Umschaltzeitpunkt und ein Unterschreiten des gewünschten Nachdruckniveaus vermieden werden. So können z.B. bei Mehrfachkavitäten Füllunterschiede bestmöglich ausgeglichen werden. Insbesondere ist ein möglichst abruptes, also ein dynamisches Ändern des Ist-Drucks, insbesondere des Ist-Spritzdrucks, kurz nach dem Umschaltzeitpunkt bei gleichzeitigem Vermeiden eines Überschwingens bei einem Einregeln des Nachdruckniveaus möglich. So können vorzugsweise Gratbildungen und/oder Beschädigungen an der Spritzgießform und/oder der Förderschnecke vermieden werden.

Unter einem gekrümmten Verlauf kann verstanden werden, dass der Solldruck, insbesondere der Soll-Spritzdruck und/oder ein Soll-Werkzeuginnendruck, als mathematische Funktion beschreibbar ist, insbesondere als mathematische Funktion, deren zweite Ableitung einen von Null abweichenden Wert aufweist. Insbesondere kann die mathematische Funktion stetig, ableitbar, monoton fallend, monoton steigend und/oder streng monoton fallend/steigend sein.

Bei der mathematischen Funktion kann es sich um eine Funktion n-ter Ordnung mit n≥ leine Exponentialfunktion, insbesondere mit nicht ganzzahligen Exponenten zum Feineinstellen der Krümmung, und/oder eine Hyperbelfunktion handeln. Unter abschnittsweise gekrümmt kann verstanden werden, dass der Soll-Spritzdruckverlauf zumindest für einen zeitlichen Teilabschnitt des Übergangsvorgangs den gekrümmten Verlauf aufweist. Der Begriff gekrümmt ist weit auszulegen, insbesondere können darunter auch an die mathematische Funktion bzw. den gekrümmten Verlauf angenäherte Verläufe verstanden werden, beispielsweise mittels nummerischer mathematischer Methoden wie mittels eines Polygonzuges, insbesondere Verläufe, die einer mathematischen Funktion und/oder Krümmung so gut angenähert sind, dass diese hinsichtlich des Steuerungs- und/oder Regelungsverhaltens gleichwirkend sind. Bevorzugt wird/werden eine mathematische Funktion und/oder Teilabschnitte eines Polygonzuges vorgegeben, um den zumindest abschnittsweise gekrümmten Solldruckverlauf zu erzeugen. Eine mathematische Funktion und/oder ein Polygonzug können auf einfache Art und Weise sowie reproduzierbar vorgegeben werden. Es erfolgt also ein Vorgeben des Soll-Spritzdrucks als Soll-Spritzdruckverlauf, der durch Vorgeben der mathematischen Funktion abschnittsweise gekrümmt ist. Alternativ oder zusätzlich erfolgt ein Vorgeben des Soll-Spritzdrucks als Soll-Spritzdruckverlauf, der durch Teilabschnitte bzw. den Polygonzug näherungsweise gekrümmt ist.

Unter einem regelungstechnischen Übergangsvorgang, der auch als Ausgleichsvorgang bezeichnet werden kann, kann vorliegend ein Verhalten während einer Zeitspanne von dem Umschaltzeitpunkt bis zu einem späteren weiteren Zeitpunkt verstanden werden, an dem der Ist-Spritzdruck bis zu einem gewünschten Maß auf einen geänderten Wert des Soll-Spritzdrucks mittels Regelmitteln eingestellt ist, insbesondere bis auf eine vorgegebene oder vorgebbare Abweichung von einem konstanten Druckniveau der Nachregelphase. Der Soll-Spritzdruckverlauf weist insbesondere eine Vielzahl unterschiedlicher Steigungen auf, insbesondere ansteigend oder absteigend. Vorzugsweise ist eine erste Ableitung des Soll-Spritzdruckverlaufs betragsmäßig fallend, insbesondere zu einem Ende des Übergangsvorgangs hin betragsmäßig gegen Null fallend. Dadurch kann kurz nach dem Umschaltzeitpunkt eine vergleichsweise schnelle Änderung des Ist-Spritzdrucks und gegen Ende des Übergangsvorgangs ein möglichst wenig überschwingendes oder aperiodisches Einstellen des Nachdruckregelniveaus erfolgen.

Bei einer bevorzugten Ausführungsform des Verfahrens wird eine anfängliche Steigung des Soll-Spritzdruckverlaufs im Umschaltzeitpunkt vorgegeben. Insbesondere kann zum Umschaltzeitpunkt eine Steigung des Verlaufs des Ist-Spritzdrucks ermittelt werden, wobei für einen möglichst abrupten Übergang die Steigerung des Soll-Spritzdruckverlauf zum Umschaltzeitpunkt möglichst stark von dieser Steigung abweicht oder für einen sanften Übergang dieser entspricht oder zumindest im Wesentlichen entspricht. Die zweite Ableitung des Soll-Spritzdruckverlaufs ist zumindest abschnittsweise ungleich Null. Es kann also ein abrupter oder fließender Übergang in die Nachdruckregelphase erzeugt werden, nämlich durch die erste Ableitung des Soll-Spritzdruckverlaufs, die sich deutlich von der Steigung des Ist-Spritzdruckverlaufs kurz vor dem Umschaltzeitpunkt unterscheidet oder an diese angepasst ist. Der Soll-Spritzdruckverlauf ist also im Umschaltzeitpunkt wahlweise stetig differenzierbar für den fließenden Übergang und nicht differenzierbar für den abrupten Übergang. Im Falle des abrupten Übergangs kann durch die Krümmung im Vergleich zu einer Stufe oder linearen Rampe ein unerwünschter Einschwingvorgang beim Erreichen des Nachdruckniveaus vermieden oder zumindest deutlich reduziert werden. Insbesondere kann für den Soll-Spritzdruckverlauf mittels einer quadratischen Dämpfung eine sonst übliche lineare Rampe oder Stufe erzielt werden. Vorteilhaft kann ein üblicher Regler verwendet werden. Es kann also ein gewünschtes Verhalten der Spritzgießmaschine während des Übergangsvorgangs lediglich durch die Krümmung des Soll-Spritzdruckverlaufs in Kombination mit dem vorhandenen Regler erzielt werden. Die anfängliche Steigung kann manuell oder in Abhängigkeit zumindest eines an der Spritzgießmaschine auftretenden Parameters, Messgröße und/oder Prozessgröße automatisiert vorgegeben werden.

Bevorzugt wird mittels des Soll-Spritzdruckverlaufs ein abrupter Übergang in die Nachdruckregelphase erzeugt. Unter einem abrupten Übergang in die Nachdruckregelphase kann verstanden werden, dass ausgehend von einem aktuellen Wert des Ist-Spritzdrucks zum Umschaltzeitpunkt ein möglichst schnelles Einstellen des Nachdruckniveaus der Nachdruckregelphase erfolgt. Insbesondere kann dazu eine erste Ableitung des Soll-Spritzdruckverlauf kurz nach dem Umschaltzeitpunkt sehr viel größer oder sehr viel kleiner als eine erste Ableitung des Ist-Spritzdruckverlaufs kurz vor dem Umschaltzeitpunkt gewählt werden. Dabei kann, um ein Überschwingen beim Erreichen des Nachdruckniveaus der Nachdruckregelphase noch besser zu verhindern, die erste Ableitung des Soll-Spritzdruckverlaufs betragsmäßig auf Null abnehmen und/oder die zweite Ableitung des Soll-Spritzdruckverlaufs ebenfalls betragsmäßig auf Null abnehmen. Durch den zusätzlichen Verlauf der zweiten Ableitung kann ein noch sanfterer Übergang in das Nachdruckniveau erzielt werden.

Gemäß einer bevorzugten Alternative kann ein fließender Übergang in die Nachdruckregelphase mittels des Soll-Spritzdruckverlaufs erzeugt werden. Unter einem fließenden Übergang kann verstanden werden, dass die erste Ableitung des Soll-Spritzdruckverlaufs kurz nach dem Umschaltzeitpunkt mit der ersten Ableitung des Ist-Spritzdruckverlaufs kurz vor dem Umschaltzeitpunkt übereinstimmt oder zumindest nur geringfügig von dieser abweicht, insbesondere circa +/- 5%, vorzugsweise +/- 1%. Dadurch können trotz der Umstellung in die Nachdruckregelphase starke Änderungen des tatsächlich auftretenden Ist-Spritzdruckverlaufs vermieden werden, insbesondere kann ein ruckfreier Übergang in die Nachdruckregelphase erfolgen. Besonders bevorzugt wird wahlweise entweder der fließende oder der abrupte Übergang in die Nachdruckregelphase erzeugt.

Gemäß einer weiteren vorteilhaften Ausführungsform wird ein fließender Übergang in einen stationären Zustand der Nachdruckregelphase mittels des Soll-Spritzdruckverlaufs erzeugt. Insbesondere weist die Nachruckregelphase den vorab beschriebenen Übergangsvorgang, bei dem sich der Ist-Spritzdruck ändert, und danach den stationären Zustand auf, bei dem der Ist-Spritzdruck mittels entsprechender Steuer- und/oder Regelmittel auf einen konstanten Wert eingestellt wird. Der Soll-Spritzdruckverlauf weist während des stationären Zustandes bevorzugt ebenfalls einen konstanten Wert auf. Zum Erzeugen des fließenden Übergangs kann die erste Ableitung des Soll-Spritzdruckverlaufs betragsmäßig auf Null abnehmen. Insbesondere geht der Soll-Spritzdruck-verlauf mittels der Krümmung stetig und ableitbar in eine das Nachdruckniveau repräsentierende Horizontale über. Für den Fall, dass zum Umschaltzeitpunkt ebenfalls ein fließender Übergang vorgegeben wird, kann der Soll-Spritzdruck-verlauf einen Wendepunkt aufweisen, also insbesondere eine zweite Ableitung mit einem Nulldurchgang und/oder eine zweite Ableitung mit positiven und negativen Werten. Insbesondere wird die erste Ableitung des Soll-Spritzdruckverlaufs zunächst betragsmäßig größer und dann hin zu dem fließenden Übergang in den stationären Zustand betragsmäßig wieder kleiner, insbesondere monoton fallend/steigend und/oder ableitbar. Alternativ kann für die Nachdruckregelphase ein Nachdruckregelprofil vorgegeben werden. Das Nachdruckregelprofil kann beispielsweise anstatt eines konstanten Drucks einen leicht abfallenden Druck als Vorgabe aufweisen. Dementsprechend erfolgt der fließende Übergang in den, insbesondere leicht abfallend, vorgegebenen Druck des Nachdruckregelprofils. Dazu kann beispielsweise die erste Ableitung des Soll-Druckverlaufs am Übergang in die Nachdruckphase an eine erste Ableitung des vorgegebenen leicht fallenden Nachdrucks angepasst werden.

Gemäß einer besonders bevorzugten Ausführungsform werden in einem Zyklus der abrupte Übergang in die Nachdruckregelphase und der fließende Übergang in den stationären Zustand der Nachdruckregelphase und/oder in das programmierte Nachdruckregelprofil der Nachdruckregelphase mittels des einen Soll-Druckverlaufs erzeugt. Es ist also durch die Vorgabe des Soll-Druckverlaufs gleichermaßen möglich, zu Beginn der Vorgabe den erwünschten abrupten Übergang und am Ende der Vorgabe den erwünschten fließenden Übergang zu erzeugen. Durch die vorteilhafte Vorgabe nimmt der dadurch gesteuerte beziehungsweise geregelte Soll-Druck für den Prozess beziehungsweise für eine hohe Teilequalität notwendige Werte an.

Besonders bevorzugt folgt der mittels der Steuer- und/oder Regelmittel während des Übergangsvorgangs eingestellte Ist-Spritzdruck dem Soll-Spritzdruckverlauf aperiodisch, insbesondere beim Übergang in das stationäre Nachdruck-niveau. Der Soll-Spritzdruckverlauf ist also im Vergleich zu dem Zeitverhalten der Regelmittel insbesondere so langsam, dass kein Überschwingen auftritt. Dadurch kann ein sanfter Übergang in das Nachdruckniveau erzielt werden, wobei dadurch auch unerwünschte Füllunterschiede bei Mehrfachkavitäten besonders gut ausgeglichen werden können.

Eine weitere Alternative des Verfahrens sieht ein Ermitteln eines Ist-Werkzeuginnendrucks in Abhängigkeit des gekrümmten Soll-Spritzdruckverlaufs, ein, insbesondere zusätzliches, Ermitteln des Ist-Werkzeuginnendrucks in Abhängigkeit einer nicht gekrümmten Soll-Spritzdruckrampe und ein Ermitteln einer eine Prozessverbesserung angebenden Kenngröße in Abhängigkeit von jeweils ermittelten Ist-Werkzeuginnendrücken vor. Die Ist-Werkzeuginnendrücke können mittels einer geeigneten weiteren Sensorvorrichtung ermittelt werden. Insbesondere für zumindest eine Kavität, beispielsweise an einer nacheilenden Kavität, die aufgrund einer Werkzeuggeometrie als letzte vollständig befüllt wird. Es ist jedoch auch denkbar, an mehreren Kavitäten den Ist-Werkzeuginnendruck zu ermitteln. Das Verfahren kann grundsätzlich mittels einer Druckmessung, beispielsweise des Spritzdrucks durchgeführt werden, da der Ist-Werkzeuginnendruck neben anderen Einflussfaktoren von dem Spritzdruck abhängig ist. Durch die weitere Messung des zumindest einen Ist-Werkzeuginnendrucks mittels der zumindest einen weiteren Messstelle kann jedoch eine bessere verfahrenstechnische Bewertung, insbesondere Teilequalitätsbewertung, erfolgen. Mittels der Kenngröße kann angegeben werden, um wieviel sich der Spritzgießprozess an der Spritzgießmaschine durch die Wahl des gekrümmten Soll-Spritzdruckverlaufs verbessert. Dazu können die jeweils ermittelten Ist-Werkzeuginnendrücke verglichen werden, insbesondere kann zu einem bestimmten Zeitpunkt eine Differenz als die Kenngröße verwendet werden und/oder eine mittlere Abweichung. Alternativ kann auch eine aufgespannte Fläche, die zwischen zwei Verläufen des jeweils gemessenen Ist-Werkzeuginnendrucksauftritt ermittelt werden, einmal bei Verwendung des vorteilhaften gekrümmten Soll-Spritzdruckverlaufs und im Vergleich dazu mit der nicht gekrümmten Rampe. Zur Ermittlung der Kenngröße können zumindest zwei Kavitäten, insbesondere zwei Übergangsvorgänge der entsprechenden Kavitäten betrachtet werden, vorzugsweise während eines Zyklus.

Bei einer weiteren bevorzugten Alternative des Verfahrens wird während der Nachdruckregelphase ein und derselbe Regler unverändert bzw. mit über der Zeit konstantem Verhalten als Führungsregler und stationärer Regler verwendet. Der Regler weist also für die gesamte Nachdruckphase eine zeitlich unveränderliche Parametrierung auf. Während des Übergangsvorgangs, bei dem die erste Ableitung des Soll-Spritzdruckverlaufs sich von einem konstanten Wert und/oder dem Wert Null unterscheidet, wird der Regler als Führungsregler verwendet. Sobald die erste Ableitung den Wert Null erreicht hat und/oder auch auf diesem verbleibt, bedeutet dies, dass der Sollwert dem gewünschten Nachdruckniveau der Nachdruckregelphase entspricht, wobei der Regler als stationärer Regler den Ist-Spritzdruck bestmöglich auf das Nachdruckniveau einstellt. Unter einem unveränderten Verwenden kann verstanden werden, dass der Regler einmalig parametriert wird, beispielsweise bei einem Einfahrvorgang der Spritzgießmaschine, z.B. nach einem Werkzeugwechsel oder bei einer ersten Inbetriebnahme. Insbesondere kann es sich bei dem Regler um einen vergleichsweise einfach parametrierbaren PID Regler handeln. Der Regler kann hin zu einem guten Führungsverhalten ausgelegt werden, also ein möglichst exaktes Abbilden des Soll-Spritzdruckverlaufs direkt nach dem Umschaltzeitpunkt ermöglichen, sodass insbesondere ein abrupter Übergang ohne unerwünschte Druckspitzen in die Nachdruckregelphase möglich ist. Aufgrund des gekrümmten Soll-Spritzdruckverlaufs kann trotz dieser einseitigen Reglerauslegung ein Überschwingen bei Erreichen des stationären Zustandes vermieden oder zumindest auf ein Minimum reduziert werden, sodass insbesondere bei Mehrfachkavitäten Füllunterschiede besonders gut ausgeglichen werden. Grundsätzlich lässt sich die gewünschte Solldruckkurve aber auch dadurch erreichen, dass bei einer beliebigen Solldruckkurve der Regler verändert wird, also so programmiert wird, dass sich im Ergebnis der erfindungsgemäße Solldruckverlauf ergibt. Es kommt also auf die von der Maschine wahrgenommene Solldruckkurve an.

Durch die vorteilhafte Vorgabe des Soll-Spritzdruckverlaufs können sowohl fließende als auch abrupte Übergänge am Anfang und/oder Ende des Übergangsvorgangs mit einer möglichst geringen Regelabweichung und/oder Schwingungsneigung erzeugt werden. Insbesondere ergibt sich für das Bedienpersonal der Spritzgießmaschine eine Erleichterung, da der Regler zum Stellen des Spritzdrucks für unterschiedlichste Werkzeuge und Spritzgießzyklen gleichermaßen verwendet werden kann. Eine entsprechend flexible Anpassung an verschiedene Werkzeuge und/oder Zyklen kann durch das Bedienpersonal auf anschauliche Art und Weise durch die Vorgabe des zumindest abschnittsweise gekrümmten Soll-Spritzdruckverlaufs erfolgen.

Eine Zeitspanne von einem Umschaltzeitpunkt in die Nachdruckregelphase, bis die erste Ableitung des Soll-Spritzdruckverlaufs den Wert Null erreicht und/oder auf dem Wert Null verbleibt, und/oder bis zum Erreichen eines Nachdruckniveaus und/oder bis zum Erreichen eines vorgegebenen Nachdruckregelprofils ist in Abhängigkeit zumindest eines Parameters der Spritzgießmaschine vorgebbar.

Bei dem Parameter kann es sich z.B. um eine Messgröße, den Spritzdruck, ein Spritzdruckintegral, ein Spritzdruckdifferential, einen Schneckenweg, eine Einspritzgeschwindigkeit, eine Einspritzbeschleunigung/-verzögerung, eine Einspritzzeit, den Werkzeuginnendruck, ein Werkzeuginnendruckintegral und/oder ein Werkzeuginnendruckdifferential handeln. Außerdem ist es möglich, dass für ein gutes Regelverhalten die Zeitspanne von einer Einschwingzeit des Reglers abhängt und beispielsweise das 0,5 bis 5-fache der Einschwingzeit beträgt. Der Wert Null der ersten Ableitung wird insbesondere dann erreicht, wenn der Soll-Spritzdruckverlauf das Nachdruckniveau erreicht bzw. den konstanten Wert des Nachdruckniveaus zumindest näherungsweise annimmt. Insbesondere entspricht die Zeitspanne dem Übergangsvorgang. Je nach Auslegung des Soll-Spritzdruckverlaufs kann der Übergangsvorgang jedoch noch etwas länger dauern, sich also etwas in die stationäre Phase der Nachdruckregelung erstrecken. Unter einer Einschwingzeit eines Reglers, die auch als Ausregelzeit bezeichnet werden kann, wird eine Zeitspanne verstanden, die verstreicht, bis der Regler einen Sollwertsprung bis auf eine tolerierbar kleine Regelabweichung eingeregelt hat. Alternativ oder zusätzlich ist es denkbar, dass das Nachdruckniveau selbst einer zeitlichen Änderung unterliegt, also nicht konstant ist. In einem Fall kann auch ein asymptotischer Übergang in das Nachdruckniveau erfolgen. Dazu kann die erste Ableitung am Umschaltzeitpunkt beispielsweise für einen abrupten Übergang einen Wert ungleich Null aufweisen und für den asymptotischen Übergang in das nicht konstante Nachdruckniveau einen an eine erste Nachdruckableitung des Nachdruckniveaus angepassten, insbesondere gleichen, Wert aufweisen.

Bevorzugt kann der Soll-Spritzdruckverlauf in Abhängigkeit einer Bedienereingabe vorgegeben bzw. an der Spritzgießmaschine eingestellt werden. Dadurch kann der Prozess auf einfache Art und Weise, insbesondere anschaulich, manuell beeinflusst und/oder optimiert werden. Insbesondere kann der Soll-Spritz-druckverlauf grafisch dargestellt und zur Auswahl durch den Bediener angeboten werden. Dadurch ist eine intuitive Bedienung und/oder Prozessoptimierung möglich.

Der Soll-Spritzdruckverlauf wird in Abhängigkeit zumindest einer in der Spritzgießmaschine messbaren Messgröße ermittelt und/oder ausgewählt. Insbesondere kann dies automatisiert oder in Abhängigkeit der Bedienereingabe durch den Bediener der Spritzgießmaschine erfolgen. Vorzugsweise kann der Ist-Spritzdruck z.B. am Umschaltzeitpunkt verwendet werden. Es ist beispielsweise denkbar, den Soll-Spritzdruckverlauf mithilfe einer quadratischen Interpolation des Istwerts des Spritzdrucks am Umschaltzeitpunkt und dem zu erreichenden konstanten Solldruck des Nachdruckniveaus zu ermitteln. Gegebenenfalls können Steilheitsparameter vorgegeben werden, insbesondere am Umschaltzeitpunkt und/oder am Übergang in das Nachdruckniveau. Der Krümmung und/oder eine die Krümmung definierende mathematische Funktion wird verändert, vorgegeben, bestimmt, ermittelt und/oder berechnet . So ist es möglich, wahlweise den abrupten oder fließenden Übergang in die Nachdruckregelphase, eine Ordnung der den Soll-Spritzdruckverlauf definierenden mathematischen Funktion, die anfängliche Steigung und/oder einen Verlauf einer Ableitung n-ter Ordnung des Soll-Spritzdruckverlaufs vorzugeben. Ferner kann die den Soll-Druckverlauf vorgebende mathematische Funktion geändert werden.

Außerdem kann bevorzugt ein Prozess der Spritzgießmaschine auf sich selbst rückwirkend ausgelegt sein. Dazu kann eine Kennzahl ermittelt werden, in deren Abhängigkeit der Soll-Druckverlauf eingestellt, vorgegeben und/oder ausgewählt wird. Die Kennzahl kann in Abhängigkeit des Ist-Drucks ermittelt werden. Alternativ oder zusätzlich kann die Kennzahl in Abhängigkeit eines Verlaufs des Ist-Drucks, insbesondere im Vergleich zu dem Soll-Druck und/oder Verlauf des Soll-Drucks, ermittelt werden. Ferner kann ein Überschwingen, Unterschwingen und/oder aperiodisches Verhalten des Ist-Drucks im Vergleich zu dem Soll-Druckverlauf ermittelt und darauf basierend die Kennzahl ermittelt werden. Die Kennzahl kann als Kriterium für eine Optimierung des Prozesses dienen. Beispielsweise kann die Kennzahl in einem Zyklus des Prozesses ermittelt werden und für die Vorgabe oder Auswahl des Soll-Drucks beziehungsweise Soll-Druckverlaufs eines späteren, insbesondere direkt nachfolgenden, Zyklus ausgewertet werden.

Schließlich ist es denkbar, den Soll-Spritzdruckverlauf durch Addieren einer gekrümmten Funktion zu einem der Nachdruckregelung als stationärer Sollwert zugrunde liegenden Nachdruckniveau zu erzeugen. Dadurch kann bei herkömmlichen Maschinensteuerungen, die beispielsweise einen stufenförmigen Übergang in das Nachdruckniveau vorsehen, der vorteilhaft gekrümmte Verlauf für die Nachdruckregelphase generiert werden. Es können also Standardsteuerungen und/oder Regelungen auf einfache Art und Weise verwendet und vorteilhaft modifiziert werden. So kann der beschriebene Übergangsvorgang auch mit einer Standard-Maschinensteuerung erzielt werden. Ohne das Hinzuaddieren würde der Übergangsvorgang lediglich aus der Reglerantwort des verwendeten Standardreglers auf eine Stufenfunktion bestehen.

Die Aufgabe wird außerdem durch einen Regler eingerichtet, ausgelegt, konstruiert und/oder programmiert zum Durchführen eines vorab beschriebenen Verfahrens sowie durch eine den Regler aufweisende Spritzgießmaschine gelöst. Es ergeben sich die vorab beschriebenen Vorteile.

### Kurzbeschreibung der Figuren

Im Folgenden wird die Erfindung anhand des in den Figuren dargestellten Ausführungsbeispiels erläutert. Es zeigen:
- Fig. 1a bis 2b: unterschiedliche Verläufe eines Spritzdrucks einer Spritzgießmaschine gemäß Stand der Technik;
- Fig. 2c: einen Druckverlauf an einer Spritzgießmaschine unter Verwendung eines erfindungsgemäßen Soll-Spritzdruckverlaufs;
- Fig. 3: eine Gegenüberstellung von zwei Ist-Werkzeuginnendruckverläufen eines Mehrfachkavitätenwerkzeuges, jeweils im Vergleich zu aus dem Stand der Technik bekannten Verläufen;
- Fig. 4a, 4b: eine Gegenüberstellung von zwei weiteren Soll-Spritzdruckverläufen, wobei gemäß Fig. 4a ein vergleichsweise niedrigeres und gemäß Fig. 4b ein vergleichsweise höheres Nachdruckniveau vorgebbar sind;
- Fig. 5a, 5b: eine Gegenüberstellung zweier weiterer Soll-Spritzdruck-verläufe, wobei gemäß Fig. 5a an einem Umschaltzeitpunkt ein abrupter Übergang und gemäß Fig. 5b ein sanfter Übergang in die Nachdruckregelphase vorgebbar ist;
- Fig. 6: eine schematische Darstellung einer zyklisch arbeitenden Spritzgießmaschine.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

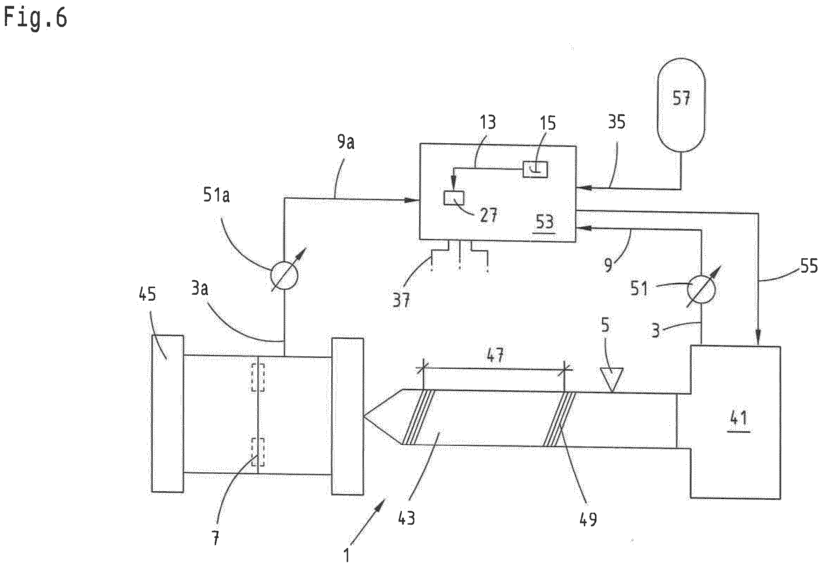

Fig. 6 zeigt eine stark schematisierte Ansicht einer zyklisch arbeitenden Spritzgießmaschine 1. Diese weist eine mittels einer Antriebseinheit 41 antreibbare Plastifiziereinheit 43 auf. In der Plastifiziereinheit 43 kann ein plastifizierbares Spritzgießmaterial 5 plastifiziert, aufbereitet und homogenisiert und in ein hydraulisch dieser nachgeschaltetes Spritzgießwerkzeug 45 eingespritzt werden, das in einer zeichnerisch nicht dargestellten Formschließeinheit zum Öffnen und Schließen des Spritzgießwerkzeugs 45aufgenommen ist. Das Plastifizieren und Einspritzen des Spritzgießmaterials 5 erfolgt auf bekannte Art und Weise mittels einer von der Antriebseinheit 41 angetriebenen und entlang eines Schneckenwegs 47 bewegbaren Fördermittels wie einer Schnecke 49. Der Schneckenweg 47 ist dabei durch eine vorderste und hinterste Stellung der Schnecke 49 angedeutet. Über nicht näher dargestellte Einspritzkanäle wird das Spritzgießmaterial 5 in zumindest eine Kavität 7 des Spritzgießwerkzeugs 45 eingespritzt. Beispielhaft sind in Fig. 6 gestrichelt zwei der Kavitäten 7 eingezeichnet, es können aber auch mehr als zwei Kavitäten vorgesehen sein. Beim Einspritzvorgang tritt innerhalb der Kavität 7 des Spritzgießwerkzeugs 45 infolge des eingespritzten Spritzgießmaterials 5 ein Werkzeuginnendruck 3 auf. Der Spritzdruck 3 kann mittels einer Sensorvorrichtung 51 gemessen werden und als Ist-Spritzdruck 9 einer einen Regler 27 aufweisenden Steuervorrichtung 53 zur Verfügung gestellt werden. Der Werkzeuginnendruck 3a kann mittels einer weiteren Sensorvorrichtung 51a gemessen und als Ist-Werkzeuginnendruck 9a zur Verfügung gestellt werden.

Der Regler 27 generiert aus dem Ist-Spritzdruck 9 und einem Sollwert ein Stellsignal 55 zum Stellen des Spritzdrucks 3. Das Stellsignal 55 wirkt beispielsweise auf die Antriebseinheit 41, kann jedoch auch auf andere Komponenten der Spritzgießmaschine 1 wirken, beispielsweise auf die Formschließeinheit.

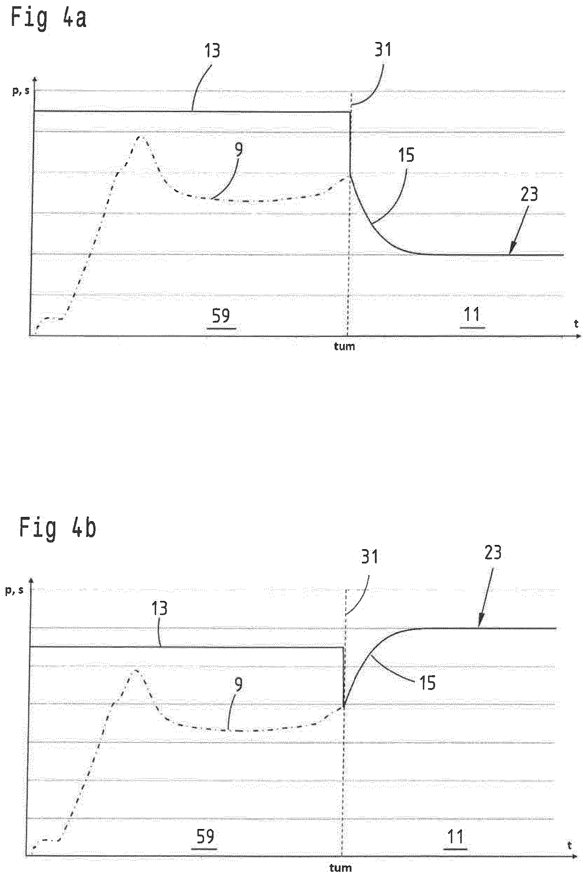

Vorteilhaft wird dem Regler 27 z.B. gemäß Fig. 4a bis 5b während einer Nachdruckregelphase 11 der Soll-Spritzdruck 13 in Form eines zumindest näherungsweise abschnittsweise gekrümmten Soll-Spritzdruckverlaufs 15 vorgegeben. Der Soll-Spritzdruckverlauf 15 wird insbesondere in Abhängigkeit einer Bedienereingabe 35 eines Bedieners 57 erzeugt und/oder ausgewählt. Alternativ oder zusätzlich kann dies jedoch in Abhängigkeit zumindest einer an der Spritzgießmaschine 1 messbaren Messgröße 37 erfolgen. Bei der Messgröße 37 kann es sich um eine beliebige Prozessgröße handeln, die an der Spritzgießmaschine 1 auftritt und/oder messbar ist.

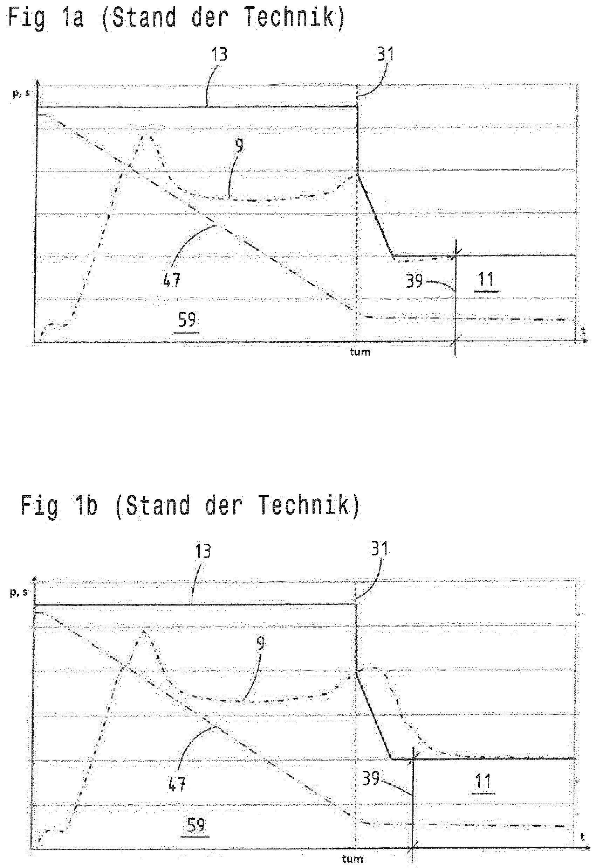

Fig. 1a und 1b zeigen jeweils an einer Spritzgießmaschine gemäß dem Stand der Technik auftretende Kurven, und zwar eine Kurve eines Soll-Spritzdrucks 13 und in Reaktion darauf eine Kurve eines Ist-Spritzdrucks 9. Außerdem ist in Fig. 1a noch ein Schneckenweg 47 eingezeichnet. Fig. 1a zeigt dabei zumindest teilweise einen Spritzzyklus der Spritzgießmaschine. Dieser weist eine Einspritzphase 59, bei der Spritzgießmaterial in die Kavität eingespritzt wird und beginnend an einem Umschaltzeitpunkt 31 die Nachdruckregelphase 11 auf. Es ist zu erkennen, dass der Soll-Spritzdruck 13 bzw. Einspritzdruck am Umschaltzeitpunkt 31 auf den Ist-Spritzdruck 9 eingestellt und von dort rampenförmig abfallend vorgegeben wird. Die abfallende Rampe endet auf Höhe eines bis zum Ende der Nachdruckregelphase 11 konstant vorgegebenen Nachdruckniveaus 39. Gemäß Fig. 1a wird in Abhängigkeit des Soll-Spritzdrucks 13 der Ist-Spritzdruck 9 mittels eines vergleichsweise harten Reglers gesteuert bzw. eingestellt. Es ist zu erkennen, dass dadurch ein abrupter Abfall des Ist-Spritzdrucks 9 am Umschaltzeitpunkt 31 beginnt. Am Ende der abfallenden Rampe des Soll-Spritzdrucks 13 kommt es zu einem Überschwingen, wobei das gewünschte Nachdruckniveau 39 unterschritten wird.

Fig. 1b zeigt die in Fig. 1a gezeigten Kurven, wobei im Unterschied ein vergleichsweise weicher Regler zum Einstellen bzw. Beeinflussen des Ist-Spritz-drucks 9 verwendet wird. Wie in Fig. 1a wird am Umschaltzeitpunkt 31 der Ist-Spritzdruck zunächst gemessen und der Soll-Spritzdruck 13 auf diesen Wert eingestellt. Die Vorgabe in Form der auf das Nachdruckniveau 39 abfallenden Rampe entspricht ebenfalls der Fig. 1a. Im Unterschied ist zu erkennen, dass durch den vergleichsweise weichen Regler, der dadurch ein langsameres Führungsverhalten aufweist, der Ist-Spritzdruck 9 kurz nach dem Umschaltzeitpunkt 31 zunächst überschwingt, also weiter erhöht wird, und dann mit einer vergleichsweise großen Abweichung zeitlich versetzt und ohne Überschwingen auf das konstante Nachdruckniveau 39 eingestellt wird. Der gemäß Fig. 1b verwendete Regler weist also ein schlechteres Führungsverhalten und dafür ein schwingungsärmeres Regelverhalten für das konstante Nachdruckniveau 39 auf.

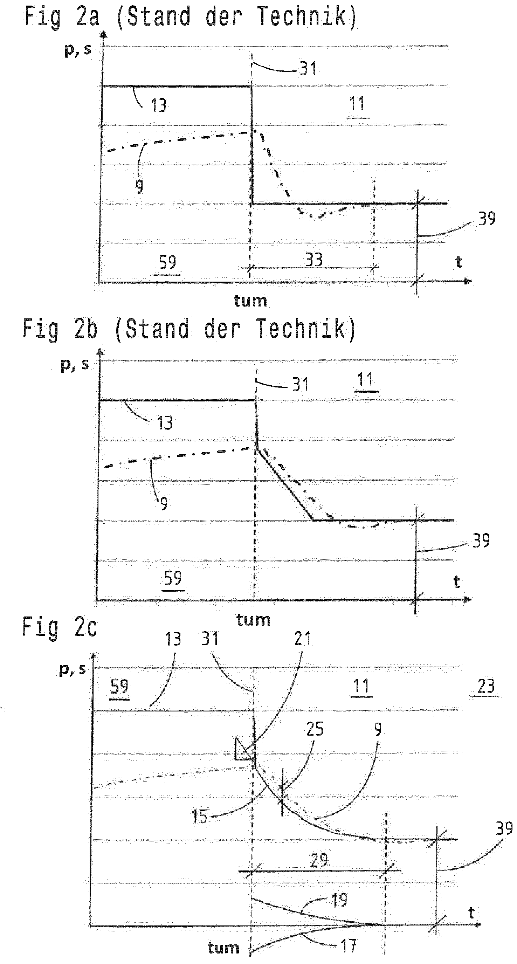

Fig. 2a zeigt eine weitere Möglichkeit eines möglichst abrupten Übergangs in die Nachdruckregelphase 11 gemäß dem Stand der Technik. Zum Umschaltzeitpunkt 31 wird der Soll-Spritzdruck 13 in Form einer Stufe auf das Nachdruckniveau 39 vorgegeben. Das Einstellen des Ist-Spritzdrucks 9 erfolgt gemäß Fig. 2a ebenfalls mit einem vergleichsweise harten Regler. Es ist zu erkennen, dass während einer Einschwingzeit 33, nach deren Ablauf das Nachdruckniveau 39 bis auf eine tolerierbare Regelabweichung eingestellt ist, ein vergleichsweise starkes Überschwingen auftritt.

Fig. 2b zeigt die in Fig. 2a gezeigten Kurven, wobei ebenfalls ein vergleichsweise harter Regler verwendet wird. Der Soll-Spritzdruck 13 wird gemäß Fig. 2b analog der Fig. 1a und 1b mittels eine Rampe, die von dem Umschaltzeitpunkt 31 auf das Nachdruckniveau 39 abfällt, vorgegeben. Es ist ersichtlich, dass trotz der Vorgabe als Rampe ein Überschwingen nach dem Ende der Rampe auftritt.

Fig. 2c zeigt Kurven analog der in Fig. 2a und 2b gezeigten, jedoch unter Verwendung eines vorteilhaften abschnittsweise gekrümmten Soll-Spritzdruckverlaufs 15. Der Soll-Spritzdruckverlauf 15 kann in Form einer mathematischen Funktion vorgegeben, zumindest an diese angenähert oder empirischer Natur sein. Insbesondere kann es sich um eine quadratische Funktion, eine Potenzfunktion n-ter Ordnung, ein Polynom n-ter Ordnung, eine Exponentialfunktion, eine Hyperbel, eine Sinus-/Cosinusfunktion oder ähnliches handeln. Der Soll-Spritzdruckverlauf 15 weist in der Darstellung der Figur 2c eine erste Ableitung 17 auf, die vorliegend bis zum Erreichen des konstanten Nachdruckniveaus 39 auf den Wert Null abfällt. Eine zweite Ableitung 19 des Soll-Spritzdruckverlaufs 15 weist über eine gesamte Zeitspanne 29 einen positiven Wert auf. Die zweite Ableitung 19 muss dabei nicht immer auf den Wert Null zuführen, sondern kann im speziellen auch einen konstanten Wert annehmen und nach Ablauf der Zeitspanne 29 zu Null werden. Der gekrümmte Soll-Spritzdruckverlauf 15 erstreckt sich über die Zeitspanne 29.

Es ist zu erkennen, dass aufgrund des gekrümmten Soll-Spritzdruckverlaufs 15 der Regler 27 den Ist-Spritzdruck 9 mit einer vergleichsweise kleineren Abweichung 25 zu dem Soll-Spritzdruckverlauf 15 im Sinne eines Führungsreglers stellt. Nach Ablauf der Zeitspanne 29 wirkt der Regler 27 aufgrund der konstanten Vorgabe des Nachdruckniveaus 39 als stationärer Regler, wobei gemäß Fig. 2c ein minimales Überschwingen stattfindet. Es ist möglich, die Zeitspanne 29 so groß zu wählen, dass beim Übergang in das Nachdruckniveau 39 kein Überschwingen mehr stattfindet. Alternativ oder zusätzlich ist es denkbar, auch die zweite Ableitung 19 auf den Wert Null zu führen, sodass ein noch sanfterer Übergang in das Nachdruckniveau 39 möglich ist. Insbesondere ist es möglich, die Zeitspanne 29 an eine Einschwingzeit 33 des Reglers 27 anzupassen. Die Einschwingzeit 33 des Reglers 27 ist beispielhalft in Fig. 2a dargestellt, beispielsweise als Zeit zum Einregeln nach einem Sollwertsprung. Grundsätzlich gilt, je länger die Zeitspanne 29, desto besser kann der Regler 27 dem Soll-Spritzdruckverlauf 15 folgen und je kürzer, desto schneller wird das Nachdruckniveau 39 erreicht. Nach der Einschwingzeit folgt ein stationärer Zustand 23, bei dem der Ist-Spritzdruck 9 auf das konstante Nachdruckniveau 39 geregelt wird.

Aufgrund einer vergleichsweise großen anfänglichen Steigung 21, die in Fig. 2c mittels eines Steigungsdreieckes symbolisiert ist, kann zum Umschaltzeitpunkt 31 ein abrupter Übergang in die Nachdruckregelphase 11 erzeugt werden, wobei dennoch ein Überschwingen nach Ablauf der Zeitspanne 29 bestmöglich vermeidbar oder zumindest auf ein Minimum reduzierbar ist. Die Länge der Zeitspanne 29 kann beispielsweise davon abhängig gemacht werden, wie gut eine nacheilende Kavität 7 des Spritzgießwerkzeugs 45 noch befüllbar ist. Ein gutes Regelverhalten ergibt sich beispielsweise, wenn die Zeitspanne 29 zumindest das 0,5 bis 5-fache der Einschwingzeit 33 des Reglers 27 beträgt.

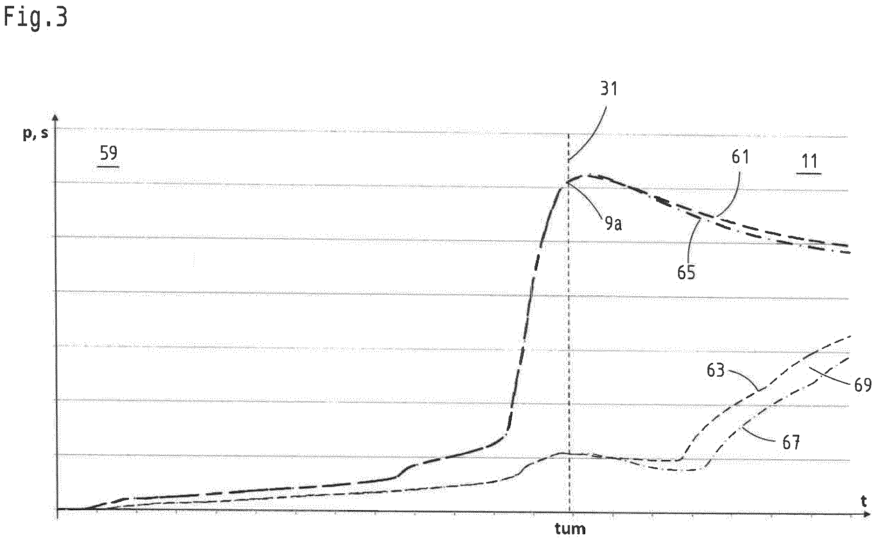

Fig. 3 zeigt insgesamt vier Ist-Werkzeuginnendruckverläufe beispielhaft an zwei Kavitäten eines Mehrkavitätenwerkzeuges, jeweils gemäß Stand der Technik mit einer linearen Rampe als Vorgabegröße und der in Fig. 2c beschriebenen erfindungsgemäßen Sollwertvorgabe in Form des Soll-Spritzdruckverlaufs 15. Die Sollwertvorgaben sind in Fig. 3 zur Verbesserung der Übersichtlichkeit nicht dargestellt.

Zu erkennen ist der Umschaltzeitpunkt 31, an dem die Spritzgießmaschine 1 in die Nachdruckregelphase 11 umgeschaltet wird. Mittels einer ersten gestrichelten fett gedruckten Kurve 61 ist ein Verlauf des Ist-Werkzeuginnendrucks 9a nach einem erfindungsgemäßen Umschalten mittels des Soll-Spritzdruckverlaufs 15 einer vorauseilenden Kavität 7 dargestellt. Mittels einer zweiten normal gedruckten gestrichelten Kurven 63 ist der korrespondierende Verlauf des Ist-Werkzeuginnendrucks 9a einer nacheilenden Kavität in Fig. 3 dargestellt. Mittels einer strichpunktiert und fettgedruckten dritten Kurve 65 ist der Ist-Werkzeuginnendruck eingezeichnet, wie er sich bei einem Umschalten über eine aus dem Stand der Technik bekannte lineare Rampe ergibt. Entsprechend ist mittels einer schwach gedruckten strichpunktierten vierten Kurve 67 der Ist-Werkzeuginnendruck gemäß Stand der Technik der nacheilenden Kavität dargestellt. Es ist zu erkennen, dass unter Verwendung des erfindungsgemäßen Soll-Spritzdruckverlaufs 15 die vorauseilende Kavität, also die erste Kurve 61 und die dritte Kurve 65 nach Stand der Technik eine quasi gleichgroße Druckspitze kurz nach dem Umschaltzeitpunkt 31 durchlaufen. Es findet also erfindungsgemäß ein gewünschtes abruptes und Druckspitzen vermeidendes Umschalten in die Nachdruckregelphase 11 statt.

Anhand der vierten Kurve 67 ist zu erkennen, dass die nacheilende Kavität bei einer Umschaltung gemäß Stand der Technik ausgehend von einem Wert des Ist-Spritzdrucks 9 zum Umschaltzeitpunkt 31 zunächst abfällt und dann auf das Nachdruckniveau 39 geführt wird.

Mit der erfindungsgemäßen Umschaltung verläuft die zweite Kurve 63 der nacheilenden Kavität ausgehend von dem Ist-Werkzeuginnendruck 9 zum Umschaltzeitpunkt 31 ungefähr horizontal, also ohne wesentlich abzufallen, und wird dann ebenfalls auf das Nachdruckniveau 39 gestellt.

Die erfindungsgemäße zweite Kurve 63 und die vierte Kurve 67 gemäß Stand der Technik spannen eine Fläche 69 auf. Diese Fläche 69 kann als Kenngröße zum Feststellen einer Verbesserung des Prozesses durch Verwendung des erfindungsgemäßen Soll-Spritzdruckverlaufs 15 verwendet werden. Alternativ oder zusätzlich kann auch eine Differenz zwischen den Kurven 63 und 67 zu einem bestimmten Zeitpunkt nach dem Umschaltzeitpunkt 31 als die Kenngröße verwendet werden.

Der Druckanstieg in der nacheilenden Kavität ist bei Verwendung des erfindungsgemäßen Soll-Spritzdruckverlaufs 15 deutlich früher gegeben als bei der linearen Nachdruckrampe gemäß dem Stand der Technik. Dies ist aufgrund des fließenden Übergangs in das Nachdruckniveau 39 möglich. Es erfolgt also ein möglichst weiches Verhalten, insbesondere im Sinne eines bionischen Übergangs an einem Ende der Übergangsphase in das Nachdruckniveau 39, also insbesondere am Ende der Zeitspanne 29, was zu einem prozessausgleichenden Verhalten führt. Dadurch kann ein Ausgleich von Füllunterschieden zwischen der vorauseilenden und der nacheilenden Kavität stattfinden.

Alternativ oder zusätzlich ist es möglich, den Spritzgießprozess auf sich selbst zurückwirkend auszulegen. Dazu kann durch einen Vergleich des Soll-Drucks mit dem Ist-Druck, insbesondere des Soll-Spritzdrucks 13 mit dem Ist-Spritzdruck 9, insbesondere eines Soll-Werkzeuginnendrucks mit dem Ist-Werkzeuginnendruck 9a, vorzugsweise zwischen den entsprechenden Verläufen dieser Soll- und Ist-Größen, eine Kennzahl ermittelt werden. Zum Ermitteln der Kennzahl kann beispielsweise ausgewertet werden, ob und wie stark der Ist-Druck überschwingt oder unterschwingt oder ob dieser sich aperiodisch zu dem Soll-Druck verhält, beispielsweise beim Übergang in das Nachdruckniveau. Alternativ oder zusätzlich kann zum Umschaltzeitpunkt 31 bei einem abrupten Übergang ermittelt werden ob und wie stark der Ist-Druck überschwingt.

Für die selbsttätige Prozessoptimierung kann insbesondere die in einem Zyklus ermittelte Kennzahl für einen späteren Zyklus zum Auswählen und/oder Anpassen des Solldruckverlaufs verwendet werden. Der Soll-Druckverlauf des späteren Zyklus wird also in Abhängigkeit der Kennzahl des früheren Zyklus ausgewählt, angepasst und/oder vorgegeben. Dadurch kann den Spritzgießprozess automatisch optimiert werden. Insbesondere kann die Krümmung des Soll-Druckverlaufs in Abhängigkeit der Kennzahl eingestellt oder angepasst werden.

Im Vergleich zum Stand der Technik, wie in den Fig. 2a und 2b gezeigt, ist durch die nicht lineare mathematische Funktion des Soll-Spritzdruckverlaufs 15 ein möglichst dynamischer Druckabbau am Umschaltzeitpunkt 31 in Kombination mit einem fließenden Übergang in das Nachdruckniveau 39 möglich. Dadurch können aus prozesstechnischer Sicht sowohl Druckspitzen vermieden oder zumindest minimiert werden, wobei gleichzeitig ein Ausgleich von Füllunterschieden bei Mehrfachkavitäten erzielbar ist. Ein dynamischer Druckabbau verhindert Druckspitzen in der vorauseilenden Kavität, der fließende Übergang in den Nachdruck wirkt sich ausgleichend auf eventuell vorhandene Füllunterschiede bei Mehrfachkavitäten, insbesondere der vorab beschriebenen nacheilenden Kavität aus.

Fig. 4a und 4b zeigen im Vergleich zwei weitere Beispiele eines vorteilhaften Soll-Spritzdruckverlaufs 15. Fig. 4a stellt einen Soll-Spritzdruckverlauf 15 analog des in Fig. 2c beschriebenen dar. Insofern wird auf die Beschreibung der Fig. 2c verwiesen. Im Unterschied dazu steigt der Soll-Spritzdruckverlauf 15 ausgehend von dem gemessenen Ist-Spritzdruck 9 zum Umschaltzeitpunkt 31 auf ein über diesem liegendes Nachdruckniveau 39 an. Gemäß den Fig. 4a und 4b ist ersichtlich, dass der gekrümmte Soll-Spritzdruckverlauf 15 zum Einstellen eines höheren oder niedrigeren Nachdruckniveaus 39 als der am Umschaltzeitpunkt 31 aktuell gemessene Ist-Spritzdruck 9 verwendbar ist. Die dahinter stehende nicht lineare mathematische Funktion kann also für beide Richtungen, also zum Auf- und Abregeln verwendet werden.

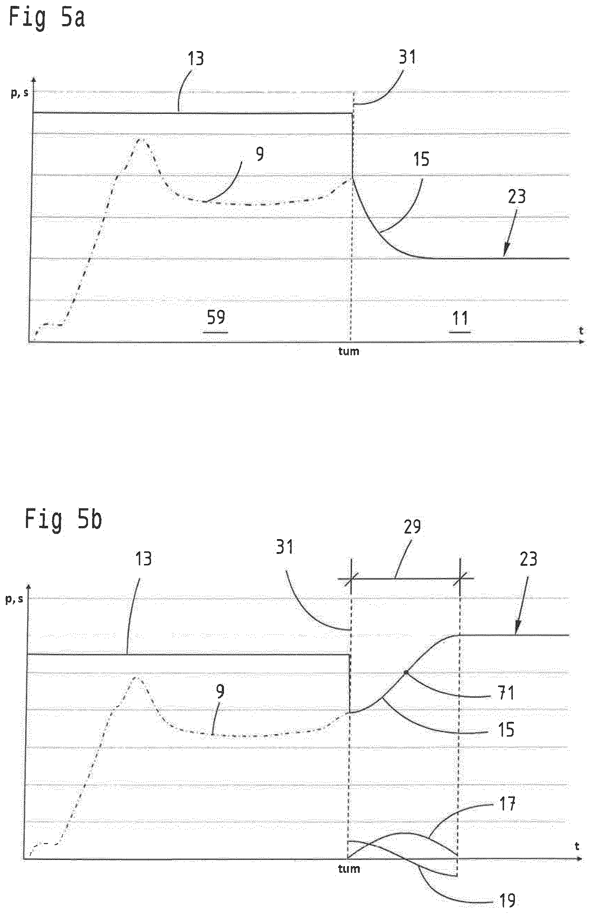

Fig. 5a und 5b zeigen einen weiteren Vergleich zweier Soll-Spritzdruck-verläufe 15. Fig. 5a entspricht im Wesentlichen Fig. 4a. Insofern wird auf die Beschreibung der Fig. 4a verwiesen.

Im Unterschied zur Fig. 5a erfolgt gemäß Fig. 5b ein fließender Übergang zum Umschaltzeitpunkt 31. Dazu weist der Soll-Spritzdruckverlauf 15, insbesondere zum Umschaltzeitpunkt 31 nicht nur den Wert des Soll-Spritzdrucks 9 auf sondern zusätzlich auch eine an diesen angepasste erste Ableitung 17. Insbesondere weist die erste Ableitung 17 des Soll-Spritzdruckverlaufs 15 zum Umschaltzeitpunkt 31 eine Steigung von Null oder ungefähr Null auf. Dies ermöglicht einen fließenden Übergang in die Nachdruckregelphase 11. Im weiteren Verlauf steigt die erste Ableitung 17 an, um dann wieder bis zum Ende der Zeitspanne 29 auf Null abzufallen. Die zweite Ableitung 19 weist zunächst einen positiven Wert und dann einen negativen Wert auf. Der Soll-Spritzdruckverlauf 15 weist also ungefähr in der Mitte der Zeitspanne 29 einen Wendepunkt 71 auf. Dadurch ist es möglich, sowohl am Umschaltzeitpunkt 31, also zu Beginn der Nachdruckregelphase 11 bzw. des Übergangsvorgangs in das Nachdruckniveau 39 beim Einschwingen auf das Nachdruckniveau 39, also am Ende bzw. nach Ablauf der Zeitspanne 29 jeweils einen fließenden Übergang zu ermöglichen. Vorteilhaft ist dies mit einem vergleichs-weise einfachen und während des gesamten Zyklus unverändert verwendeten Regler 27 möglich. Abhängig von der Wahl des Soll-Spritzdruckverlaufs 15 kann also entweder ein abrupter Übergang in die Nachdruckregelphase 11, wie in Fig. 5a oder ein fließender Übergang wie in Fig. 5b erzeugt werden. Die gezeigten Verläufe können variiert werden.

Abhängig von der Bedienereingabe 35 und/oder den Messgrößen 37 können eine Form und/oder ein Verlauf des Soll-Spritzdruckverlaufs 15 frei gewählt und/oder an den jeweiligen Spritzgießprozess angepasst werden. Dies kann vorteilhaft mittels eines unverändert parametrierten Reglers erfolgen. Wie gezeigt, können dennoch Druckspitzen bei einem gleichzeitig möglichen Ausgleichen von Füllunterschieden vermieden werden. Insbesondere sind ein möglichst steiler Druckabfall am Umschaltzeitpunkt 31 und gleichzeitig ein möglichst weiches Verhalten beim Übergang in das stationäre Nachdruckniveau möglich. Durch einfache Regleroptimierungen hinsichtlich hartem oder weichem Umschalten könnten diese Vorteile nicht gleichzeitig erzielt werden. Außerdem hat sich gezeigt, dass der Soll-Spritzdruckverlauf 15 eine Reglerauslegung erlaubt, die hinsichtlich Änderungen des Ist-Spritzdrucks 9 am Umschaltzeitpunkt 31 zusätzlich eine vergleichsweise gute Robustheit ermöglicht. Insbesondere ist ein Ausgleich von vorauseilenden Bereichen auch innerhalb von Kavitäten möglich. Der vergleichsweise weiche Übergang in das stationäre Nachdruckniveau bewirkt ein deutlich verbessertes Schwingungsverhalten. Insbesondere können Schwingungen des Reglers 27 minimiert werden. Vorzugsweise kann ein asymptotischer und/oder aperiodischer Übergang in das Nachdruckniveau 39 erzielt werden, insbesondere wenn die Zeitspanne 29 im Vergleich zur Einschwingzeit 33 vergleichsweise groß gewählt wird. Insbesondere unterliegt der Soll-Spritzdruckverlauf 15 einer stetigen Änderung der Steigung bzw. der ersten Ableitung 17. Vorzugsweise kann sich auch der Soll-Spritzdruckverlauf 15 dem Nachdruckniveau 39 asymptotisch annähern, insbesondere in Form einer entsprechenden nichtlinearen mathematischen Funktion, sich also gegebenenfalls über den eigentlichen Übergangsvorgang hinaus in den stationären Zustand 23 hinein erstrecken. Außerdem ist es möglich, eine Kurvenform des Soll-Spritzdruckverlaufs 15 über Parameter vorzugeben, insbesondere nach Auswahl mittels der Bedienereingabe 35 oder abhängig von der Messgröße 37. Vorzugsweise kann die Form des Soll-Spritzdruckverlaufs 15 anhand eines beliebigen Prozessparameters und/oder der Messgröße 37 angepasst werden wie z.B. eines Spritzdrucks, Spritzdruckintegrals, Spritzdruckdifferenzials, des Schneckenwegs 47, einer Einspritzgeschwindigkeit, einer Einspritzbeschleunigung und/oder Verzögerung, des Spritzdrucks 3, eines Spritzdruckintegrals, eines Spritzdruckdifferenzials und oder weiterer Größen.

Das Verfahren bezieht sich vorzugsweise nur auf einen Übergangsvorgang, ist jedoch nicht auf den Übergangsvorgang vom Umschaltzeitpunkt 31 in ein erstes Nachdruckniveau begrenzt. Es kann beispielsweise auch für einen Übergangsvorgang von einem ersten Nachdruckniveau auf ein nachfolgendes zweites Nachdruckniveau angewendet werden, insbesondere direkt nacheinander für aufeinanderfolgende Druckstufen beziehungsweise Druckniveaus. Ferner ist es denkbar, den Soll-Spritzdruckverlauf 15 für die gesamte Nachdruckphase anstatt als zusammengesetzte Funktion für den Übergangsvorgang und die übrige Nachdruckphase als einheitliche mathematische Funktion vorzugeben, beispielsweise als e-Funktion, insbesondere als e-Funktion wie sie bei einem beschränkten Wachstum vorkommt. Zum Ermitteln der e-Funktion kann beispielsweise das Nachdruckniveau als Schranke gesetzt werden, das Annähern der e-Funktion an die Schranke kann ein quasistationäres Nachdruckniveau vorgeben. Schließlich ist es denkbar, den Soll-Druckverlauf beziehungsweise den Soll-Spritzdruckverlauf 15 so zu verlängern, dass dieser den vorab beschriebenen Übergangsvorgang und daran anschließend ein sonst gegebenenfalls erforderliches Profil der übrigen Nachdruckregelphase in einem vorgibt. Das Nachdruckregelprofil kann beispielsweise leicht abfallend und/oder gestuft ausgebildet sein. Insbesondere kann das Nachdruckregelprofil auf übliche Art und Weise vorgegeben und/oder programmiert werden und durch Addieren mit dem Soll-Spritzdruckverlauf 15 als Gesamtvorgabe für die ganze Nachdruckregelphase verwendet werden.

Die aufgezeigten Ausführungsbeispiele können untereinander zu neuen Ausführungsbeispielen kombiniert werden. Insbesondere kann die Regelung basierend auf dem Ist-Werkzeuginnendruck 9a und/oder auf dem Ist-Spritzdruck 9 als Messgröße implementiert werden. Eine Messung des Ist-Spritzdrucks 9 bietet den Vorteil einer möglichst schnellen Regelung, die des Ist-Werkzeuginnendrucks 9a einer besseren Berücksichtigung voraus- und/oder nacheilender Kavitäten und/oder einer Regelung einer die Teilequalität direkt beeinflussenden Größe, insbesondere für eine Selbstadaption des Prozesses. Dazu kann beispielsweise die Regelung auf Basis des Ist-Spritzdrucks 9 und des Soll-Spritzdruckverlaufs 15 erfolgen, wobei die Prozessoptimierung in Abhängigkeit einer Messung beziehungsweise des zusätzlich gemessenen Ist-Werkzeuginnendrucks 9a und einer darauf basierenden Anpassung des Soll-Spritzdruckverlaufs 15 selbst erfolgen kann. Insbesondere kann dadurch trotz eventueller Materialschwankungen über eine Vielzahl von Zyklen des Prozesses durch die Anpassung der Soll-Druckverläufe, insbesondere des Soll-Spritzdrucks 13, der jeweilige Ist-Werkzeuginnendruck 9a reproduzierbar gehalten werden.

**Bezugszeichenliste**

| | | | |
|---|---|---|---|
| 1 | Spritzgießmaschine | 37 | Messgröße |
| 3 | Spritzdruck | 39 | Nachdruckniveau |
| 3a | Werkzeuginnendruck | 41 | Antriebseinheit |
| 5 | Spritzgießmaterial | 43 | Plastifiziereinheit |
| 7 | Kavität | 45 | Spritzgießwerkzeug |
| 9 | Ist-Spritzdruck | 47 | Schneckenweg |
| 9a | Ist-Werkzeuginnendruck | 49 | Schnecke |
| 11 | Nachdruckregelphase | 51 | Sensorvorrichtung |
| 13 | Soll-Spritzdruck | 51a | Sensorvorrichtung |
| 15 | Soll-Spritzdruckverlauf | 53 | Steuervorrichtung |
| 17 | erste Ableitung | 55 | Stellsignal |
| 19 | zweite Ableitung | 57 | Bediener |
| 21 | Steigung | 59 | Einspritzphase |
| 23 | stationärer Zustand | 61 | erste Kurve |
| 25 | Abweichung | 63 | zweite Kurve |
| 27 | Regler | 65 | dritte Kurve |
| 29 | Zeitspanne | 67 | vierte Kurve |
| 31 | Umschaltzeitpunkt | 69 | Fläche |
| 33 | Einschwingzeit | 71 | Wendepunkt |
| 35 | Bedienereingabe | | |

## Patentansprüche

1. Verfahren zum Steuern und Regeln eines Drucks (3,3a) einer zyklisch arbeitenden Spritzgießmaschine (1), mit
- Bereitstellen eines plastifizierten Spritzgießmaterials (5),
- Füllen zumindest einer Kavität (7) mit dem Spritzgießmaterial (5),
- Erfassen eines Ist-Drucks (9,9a),
- Umschalten auf eine Nachdruckregelphase (11) in einem Umschaltzeitpunkt (31),
- ausgehend von einem im Umschaltzeitpunkt (31) gemessenen Ist-Druck (9, 9a), Vorgeben einer Form einer Krümmung eines Soll-Drucks (13) für einen Übergang in die Nachdruckregelphase (11), als eine mathematische Funktion zum Erzeugen eines zumindest abschnittsweise gekrümmten Soll-Druckverlaufs (15), wobei die die Krümmung definierende mathematische Funktion bestimmt, ermittelt und/oder berechnet wird,
- wobei eine Zeitspanne (29) vom Umschaltzeitpunkt (31) in die Nachdruckregelphase (11) bis zum Erreichen eines Nachdruckregelprofils der Nachdruckregelphase (11) in Abhängigkeit zumindest eines Parameters und/oder einer Bedienereingabe (35) vorgegeben wird und
- wobei eine anfängliche Steigung (21) des Soll-Druckverlaufs (15) am Umschaltzeitpunkt (31) vorgegeben wird.

2. Verfahren nach Anspruch 1, **gekennzeichnet durch**:
- Vorgeben von Teilabschnitten eines Polygonzuges zum Erzeugen des Soll-Druckverlaufs (15).

3. Verfahren nach Anspruch 1 oder 2, **gekennzeichnet durch**:
- Erzeugen eines abrupten oder Erzeugen eines fließenden Übergangs in die Nachdruckregelphase (11) mittels des Soll-Druckverlaufs (15).

4. Verfahren nach einem der vorhergehenden Ansprüche, **gekennzeichnet durch**:
- Erzeugen eines fließenden Übergangs in einen stationären Zustand (23) der Nachdruckregelphase (11) und/oder in ein programmiertes Nachdruckregelprofil der Nachdruckregelphase (11) mittels des Soll-Druckverlaufs (15).

5. Verfahren nach einem der vorhergehenden Ansprüche, **dadurch gekennzeichnet, dass** der Ist-Druck (9,9a) dem Soll-Druckverlauf (15) aperiodisch folgt.

6. Verfahren nach einem der vorhergehenden Ansprüche, **gekennzeichnet durch**:
- Ermitteln des Ist-Drucks als Ist-Werkzeuginnendruck (9a) in Abhängigkeit eines gekrümmten Soll-Spritzdruckverlaufs (15) als der Druckverlauf (15),
- Ermitteln des Ist-Werkzeuginnendrucks (9a) in Abhängigkeit einer linearen Soll-Spritzdruckrampe oder Stufe,
- Ermitteln einer eine Prozessverbesserung angebenden Kenngröße in Abhängigkeit der jeweils ermittelten Ist-Werkzeuginnendrücke (9a).

7. Verfahren nach einem der vorhergehenden Ansprüche, **gekennzeichnet durch**
- Bereitstellen eines Reglers (27) für die Nachdruckregelphase (11),
- unverändertes Verwenden des Reglers (27) als Führungsregler, solange sich eine erste Ableitung (17) des Soll-Druckverlaufs (15) von Null oder einem konstanten Wert unterscheidet, und als stationärer Regler, sobald die erste Ableitung (17) auf dem Wert Null verbleibt.

8. Verfahren nach einem der vorhergehenden Ansprüche, **gekennzeichnet durch**
- Vorgeben, Ermitteln, Bestimmen, Berechnen oder Auswählen des Soll-Druckverlaufs (15) in Abhängigkeit zumindest eines Parameters der Spritzgießmaschine (1) und/oder der Bedienereingabe (35) und/oder einer Kennzahl.

9. Verfahren nach einem der vorhergehenden Ansprüche, **dadurch gekennzeichnet, dass** die Zeitspanne (29) vom Umschaltzeitpunkt (31) in die Nachdruckregelphase (11) bis die erste Ableitung (17) des Soll-Druckverlaufs (15) auf dem Wert Null verbleibt und/oder bis zum Erreichen eines Nachdruckniveaus (39) in Abhängigkeit des zumindest einen Parameters und/oder der Bedienereingabe (35) vorgebbar ist.

10. Verfahren nach Anspruch 8 oder 9, **gekennzeichnet durch** zumindest eine der folgenden wahlweisen Vorgaben mittels des Soll-Druckverlaufs (15) in Abhängigkeit des Parameters und/oder der Bedienereingabe (35) und/oder der Kennzahl:
- Ändern der den Soll-Druckverlauf (15) vorgebenden mathematischen Funktion,
- Erzeugen des abrupten oder des fließenden Übergangs in die Nachdruckregelphase (11),
- Ändern einer mathematischen Ordnung einer den Soll-Druckverlauf (15) definierenden mathematischen Funktion n-ter Ordnung,
- Vorgeben der anfänglichen Steigung (21) des Soll-Druckverlaufs (15) im Umschaltzeitpunkt (31),
- Vorgeben einer Ableitung m-ter Ordnung oder eines Verlaufs der Ableitung m-ter Ordnung des Soll-Druckverlaufs (15), wobei m < n ist.

11. Verfahren nach einem der Ansprüche 8 bis 10, **gekennzeichnet durch** zumindest einen der folgenden Schritte:
- Ermitteln der Kennzahl in Abhängigkeit des Ist-Drucks (9,9a),
- Ermitteln eines Verlaufs des Ist-Drucks (9,9a) und Ermitteln der Kennzahl in Abhängigkeit des Verlaufs,
- Ermitteln der Kennzahl in Abhängigkeit des Ist-Drucks (9,9a) im Vergleich zu dem Soll-Druckverlauf (15),
- Ermitteln der Kennzahl in Abhängigkeit eines Überschwingens oder Unterschwingens des Ist-Drucks (9,9a),
- Ermitteln der Kennzahl in Abhängigkeit eines aperiodischen Verlaufs des Ist-Drucks (9,9a),
- Auswählen oder Einstellen oder Vorgeben des Soll-Druckverlaufs (15) in Abhängigkeit der Kennzahl.

12. Verfahren nach einem der vorhergehenden Ansprüche, **gekennzeichnet durch**
- Bereitstellen des Soll-Druckverlaufs (15) durch Addieren einer gekrümmten Funktion zu einem der Nachdruckregelung als stationärer Sollwert zugrunde liegenden Nachdruckniveau (39) und/oder zu einem Nachdruckregelprofil der Nachdruckregelphase (11) und dadurch/oder Bereitstellen des Soll-Druckverlaufs (15) für die gesamte Nachdruckregelphase (11).

13. Regler (27), eingerichtet, ausgelegt, konstruiert und/oder programmiert zum Durchführen eines Verfahrens nach einem der Ansprüche 1 bis 12.

14. Spritzgießmaschine (1), eingerichtet, ausgelegt, konstruiert und/oder programmiert zum Durchführen eines Verfahrens nach einem der Ansprüche 1 bis 12 und/oder mit einem Regler (27) nach Anspruch 13.

## Claims

1. Method for controlling and regulating a pressure (3,3a) of a cyclically operating injection moulding machine (1), comprising
- providing a plasticised injection moulding material (5),
- filling at least one cavity (7) with the injection moulding material (5),
- detecting an actual pressure (9, 9a),
- switching to a holding pressure control phase (11) at a changeover time (31),
- starting from an actual pressure (9, 9a) measured at the changeover time (31), pre-setting a form of a curvature of a target pressure (13) for a transition to the holding pressure control phase (11) as a mathematical function for generating an at least partially curved target pressure curve (15), wherein the mathematical function defining the curvature is determined, detected and/or calculated,
- wherein a time period (29) from the changeover time (31) to the holding pressure control phase (11) until a holding pressure control profile of the holding pressure control phase (11) is reached is preset as a function of at least one parameter and/or an operator input (35), and
- wherein an initial gradient (21) of the target pressure curve (15) is preset at the changeover point (31).

2. Method according to claim 1, **characterized by**:
- specifying partial sections of a polygon course for generating the target pressure curve (15).

3. Method according to claim 1 or 2, **characterized by**:
- generating an abrupt or generating a flowing transition into the holding pressure control phase (11) by means of the target pressure curve (15).

4. Method according to any one of the preceding claims, **characterized by**:
- generating a flowing transition into a steady state (23) of the holding pressure control phase (11) and/or into a programmed holding pressure control profile of the holding pressure control phase (11) by means of the target pressure curve (15).

5. Method according to one of the preceding claims, **characterised in that** the actual pressure (9, 9a) follows the target pressure curve (15) aperiodically.

6. Method according to any one of the preceding claims, **characterized by**:
- Detecting the actual pressure as the actual cavity pressure (9a) as a function of a curved target injection pressure curve (15) as the pressure curve (15),
- Detecting the actual cavity pressure (9a) as a function of a linear nominal injection pressure ramp or step,
- Determining a characteristic value indicating a process improvement as a function of the respectively detected actual cavity pressures (9a).

7. Method according to any one of the preceding claims, **characterized by**
- providing a regulator (27) for the holding pressure control phase (11),
- using the controller (27) unchanged as a master controller as long as a first derivative (17) of the target pressure curve (15) differs from zero or a constant value, and as a stationary controller as soon as the first derivative (17) remains at the value zero.

8. Method according to any one of the preceding claims, **characterized by**
- Specifying, determining, calculating or selecting the desired pressure curve (15) as a function of at least one parameter of the injection moulding machine (1) and/or the operator input (35) and/or a key figure.

9. Method according to one of the preceding claims, **characterised in that** the time period (29) from the changeover point (31) into the holding pressure control phase (11) until the first derivative (17) of the target pressure curve (15) remains at the value zero and/or until a holding pressure level (39) is reached can be preset as a function of the at least one parameter and/or the operator input (35).

10. Method according to claim 8 or 9, **characterised by** at least one of the following optional specifications by means of the target pressure curve (15) as a function of the parameter and/or the operator input (35) and/or the characteristic number:
- changing the mathematical function specifying the target pressure curve (15),
- creating the abrupt or flowing transition to the holding pressure control phase (11),
- changing a mathematical order of an nth-order mathematical function defining the target pressure curve (15),
- specifying the initial gradient (21) of the target pressure curve (15) at the changeover point (31),
- specifying an mth-order derivative or a course of the mth-order derivative of the target pressure course (15), where m < n.

11. Method according to any one of claims 8 to 10, **characterized by** at least one of the following steps:
- Determine the ratio as a function of the actual pressure (9.9a),
- Determine a course of the actual pressure (9.9a) and determine the key figure as a function of the course,
- Determine the key figure as a function of the actual pressure (9,9a) compared to the target pressure curve (15),
- Determination of the ratio as a function of an overshoot or undershoot of the actual pressure (9,9a),
- Determine the key figure as a function of an aperiodic course of the actual pressure (9.9a),
- Select or set or preset the target pressure curve (15) depending on the key figure.

12. Method according to any one of the preceding claims, **characterized by**
- providing the target pressure curve (15) by adding a curved function to a holding pressure level (39) on which the holding pressure control is based as a stationary target value and/or to a holding pressure control profile of the holding pressure control phase (11) and thereby and/or providing the target pressure curve (15) for the entire holding pressure control phase (11).

13. Controller (27) arranged, configured, constructed and/or programmed to conduct a method according to any one of claims 1 to 12.

14. An injection moulding machine (1) arranged, configured, constructed and/or programmed to conduct a process according to any one of the claims 1 to 12 and/or comprising a controller (27) according to claim 13.

## Revendications

1. Procédé de commande et de réglage d'une pression (3,3a) d'une machine de moulage par injection à fonctionnement cyclique (1), comportant les étapes suivantes :
- mise à disposition d'un matériau pour moulage par injection plastifié (5),
- remplissage d'au moins une cavité (7) avec le matériau pour moulage par injection (5),
- saisie d'une pression courante (9,9a),
- commutation sur une phase de réglage de réimpression (11) à un moment de commutation (31),
- à partir d'une pression courante (9, 9a) mesurée au moment de commutation (31), prédéfinition d'une forme de courbure d'une pression de consigne (13) pour une transition dans la phase de réglage de réimpression (11), en tant que fonction mathématique pour la production d'au moins d'une évolution de pression de consigne (15) courbée au moins par intermittence, la fonction mathématique qui définit la courbure étant fixée, déterminée et/ou calculée,
- dans lequel un laps de temps (29) depuis le moment de commutation (31) sur la phase de réglage de réimpression (11) jusqu'à l'atteinte d'un profil de réglage de réimpression de la phase de réglage de réimpression (11) est prédéfini en fonction d'au moins un paramètre et/ou d'une saisie d'utilisateur (35) et
- dans lequel une augmentation initiale (21) de l'évolution de la pression de consigne (15) est prédéfinie au moment de commutation (31).

2. Procédé selon la revendication 1, **caractérisé par** :
- la prédéfinition de sections partielles d'un tracé polygonal pour la production de l'évolution de la pression de consigne (15).

3. Procédé selon la revendication 1 ou 2, **caractérisé par** :
- la production d'une transition abrupte ou la production d'une transition fluide dans la phase de réglage de réimpression (11) au moyen de l'évolution de la pression de consigne (15).

4. Procédé selon l'une des revendications précédentes, **caractérisé par** :
- la production d'une transition fluide dans un état stationnaire (23) de la phase de réglage de réimpression (11) et/ou dans un profil de réglage de réimpression programmé de la phase de réglage de réimpression (11) au moyen de l'évolution de la pression de consigne (15).

5. Procédé selon l'une des revendications précédentes, **caractérisé en ce que** la pression courante (9,9a) suit de manière apériodique l'évolution de la pression de consigne (15).

6. Procédé selon l'une des revendications précédentes, **caractérisé par** :
- la saisie de la pression courante en tant que pression interne courante d'outil (9a) en fonction d'une évolution de pression d'injection de consigne (15) incurvée en tant qu'évolution de pression (15),
- la saisie de la pression interne courante d'outil (9a) en fonction d'une rampe de pression d'injection de consigne linéaire ou d'un palier,
- la saisie d'une grandeur de référence donnant une amélioration du procédé en fonction de la pression interne courante d'outil (9a) saisie précitée.

7. Procédé selon l'une des revendications précédentes, **caractérisé par** :
- la mise à disposition d'un dispositif de réglage (27) pour la phase de réglage de réimpression (11),
- l'utilisation inchangée du dispositif de réglage (27) en tant que dispositif de réglage de guidage, tant qu'une première dérivation (17) de l'évolution de pression de consigne (15) est différente de zéro ou d'une valeur constante, et en tant que dispositif de réglage stationnaire, dès que la première dérivation (17) reste à la valeur zéro.

8. Procédé selon l'une des revendications précédentes, **caractérisé par** :
- la prédéfinition, la saisie, la détermination, la fixation, le calcul ou le choix d'une évolution de pression de consigne (15) en fonction d'au moins un paramètre de la machine de moulage par injection (1) et/ou de la saisie de l'utilisateur (35) et/ou d'une valeur de référence.

9. Procédé selon l'une des revendications précédentes, **caractérisé en ce que** le laps de temps (29) depuis le moment de commutation (31) dans la phase de réglage de réimpression (11) jusqu'à la première dérivation (17) de l'évolution de pression de consigne (15) reste à la valeur zéro et/ou est pré-définissable jusqu'à l'atteinte d'un niveau de réimpression (39) en fonction du ou des paramètre(s) et/ou de la saisie d'utilisateur (35).

10. Procédé selon la revendication 8 ou 9, **caractérisé par** l'une au moins des données suivantes au choix, au moyen de l'évolution de pression de consigne (15) en fonction du paramètre et/ou de la saisie d'utilisateur (35) et/ou de la valeur de référence :
- la modification de la fonction mathématique prédéfinissant l'évolution de la pression de consigne (15),
- la production de la transition abrupte ou fluide dans la phase de réglage de réimpression (11),
- la modification d'un ordre mathématique d'une fonction mathématique définissant l'évolution de pression de consigne (15) de n-ième ordre,
- la prédéfinition d'une augmentation initiale (21) de l'évolution de pression de consigne (15) au moment de commutation (31),
- la prédéfinition d'une dérivation d'ordre m ou d'une évolution de la dérivation d'ordre m de l'évolution de pression de consigne (15), dans laquelle m est inférieur à n.

11. Procédé selon l'une des revendications 8 à 10, **caractérisé par** l'une au moins des étapes suivantes :
- saisie d'une valeur de référence en fonction de la pression courante (9,9a),
- saisie d'une évolution de la pression courante (9,9a) et saisie de la valeur de référence en fonction de l'évolution,
- saisie de la valeur de référence en fonction la pression courante (9,9a) par rapport à l'évolution de la pression de consigne (15),
- saisie de la valeur de référence en fonction d'un dépassement ou d'une diminution de la pression courante (9,9a),
- saisie de la valeur de référence en fonction d'une évolution apériodique de la pression courante (9,9a),
- choix ou réglage ou prédéfinition de l'évolution de pression de consigne (15) en fonction de la valeur de référence.

12. Procédé selon l'une des revendications précédentes, **caractérisé par** :
- la mise à disposition de l'évolution de pression de consigne (15) par addition d'une fonction de courbure à un niveau de réimpression (39) se trouvant à la base du réglage de réimpression en tant que valeur de consigne stationnaire et/ou à un profil de réimpression de la phase de réglage de réimpression (11) et/ou la mise à disposition de l'évolution de la pression de consigne (15) pour la totalité de la phase de réglage de réimpression (11).

13. Dispositif de réglage (27), installé, réglé, construit et/ou programmé pour la mise en œuvre d'un procédé selon l'une des revendications 1 à 12.

14. Machine de moulage par injection (1), installée, conçue, construite et/ou programmée pour la mise en oeuvre d'un procédé selon l'une des revendications 1 à 12 et/ou avec un dispositif de réglage (27) selon la revendication 13.
